**Europäisches Patentamt**

**European Patent Office**

**Office européen des brevets**

(19)

(11) Veröffentlichungsnummer : **0 342 449 B1**

## (12) EUROPÄISCHE PATENTSCHRIFT

(45) Veröffentlichungstag der Patentschrift :
**26.08.92 Patentblatt 92/35**

(21) Anmeldenummer : **89108120.0**

(22) Anmeldetag : **05.05.89**

(51) Int. Cl.⁵ : **B60Q 7/00**

---

(54) **Zusammenlegbares Warndreieck.**

---

(30) Priorität : **19.05.88 DE 3817070**

(43) Veröffentlichungstag der Anmeldung :
**23.11.89 Patentblatt 89/47**

(45) Bekanntmachung des Hinweises auf die
Patenterteilung :
**26.08.92 Patentblatt 92/35**

(84) Benannte Vertragsstaaten :
**DE ES FR GB IT NL SE**

(56) Entgegenhaltungen :
**DE-A- 2 006 275**
**DE-B- 1 058 883**
**DE-B- 1 059 807**
**GB-A- 647 865**

(73) Patentinhaber : **GEBRA GMBH & CO. GEBR.**
**RADERSCHAD KG**
**Wehrstrasse 151**
**W-5202 Hennef (DE)**

(72) Erfinder : **Raderschad, Peter**
**Am Wahlberg 15**
**W-5202 Hennef (DE)**

(74) Vertreter : **Fechner, Joachim, Dr.-Ing.**
**Im Broeltal 118**
**W-5202 Hennef 1 (DE)**

EP 0 342 449 B1

EP 0 342 449 B1

## Beschreibung

Die Erfindung betrifft ein zusammenlegbares Warndreieck zur Mitführung in Kraftfahrzeugen, mit drei roten, rückstrahlenden Leisten, von denen eine an einer metallischen Trägerplatte angebracht ist oder selbst als Trägerplatte dient, und Lagern an beiden Enden der Trägerplatte, in denen Standfüße schwenkbar gelagert sind, die unter Federkraft zur Seite bis an einen Anschlag ausschwenkbar sind

Die DE-A-2006275 auf der das Oberbegriff des Anspruchs 1 basiert ist, beschreibt ein derartiges Warndreieck, bei dem die Ausschwenkung der Standfüße in zwei Stufen erfolgt. Nur die zweite Stufe, die Ausschwenkung in einer zum Warndreieck senkrechten Ebene zur Seite erfolgt durch Federdruck automatisch. Dagegen soll die erste Stufe der Schwenkbewegung, das Ausschwenken der Standfüße aus dem U-förmigen Träger durch eine Schüttelbewegung unter Schwerkraftwirkung vor sich gehen. Das Ausschwenken der Standfüße erfolgt bei diesem Warndreieck in zwei zueinander senkrechten Ebenen und daher nicht auf dem kürzesten Wege.

Aus EP-A-258906 ist ein zusammenlegbares Warndreieck bekannt, bei dem an den Enden der unteren reflektierenden Dreiecksleiste oder einer mit dieser verbundenen Trägerplatte beidseitig ausschwenkbare Standfüße angelenkt sind. Die vier Standfüße ergeben nach dem Ausschwenken auch bei stoßweiser Windeinwirkung eine sichere Standfestigkeit des Warndreiecks. Nachteilig ist jedoch, daß die vier Standfüße im Bedarfsfall, also bei einem Unfall oder einer Panne, von Hand ausgeschwenkt werden müssen. Technisch ungeübten Personen bereitet die Aufstellung des Warndreiecks daher öfter Schwierigkeiten, wenn sie kurz nach einem Unfall nervlich stark strapaziert sind.

Der vorliegenden Erfindung liegt die Aufgabe zugrunde, ein zusammenlegbares Warndreieck zur Mitführung in Kraftfahrzeugen zu schaffen, dessen Aufstellung erleichtert wird. Insbesondere soll das Warndreieck auch von technisch ungeübten Personen unter den mit einem Unfall einhergehenden nervlichen Belastungen mühelos und schnell aufgestellt werden können. Darüber hinaus soll das Warndreieck nach der Zusammenlegung einen geringen Platzbedarf haben, insbesondere in einem nur flachen Köcher untergebracht werden können. Weitere Vorteile des erfindungsgemäßen Warndreiecks ergeben sich aus der nachfolgenden Beschreibung.

Diese Aufgabe wird bei dem eingangs genannten zusammenlegbaren Warndreieck erfindungsgemäß dadurch gelöst, daß an den beiden Enden der Trägerplatte auf beiden Seiten je ein Standfuß mit seinem abgewinkelten Endteil in einem Lagerkörper gelagert ist, jeder Standfuß durch eine eigene Torsionsfeder ständig in Ausschwenkrichtung vorgespannt ist und das abgewinkelte Endteil und die dieses Endteil umgebende Torsionsfeder in dem Lagerkörper enthalten sind. Das zusammengelegte Warndreieck wird in bekannter Weise in einem köcherförmigen Behälter mitgeführt. In dem Behälter werden die in Ausschwenkrichtung vorgespannten Standfüße durch die Behälterwandung in ihren eingeschwenkten Lagen gehalten. Sobald das zusammengelegte Warndreieck jedoch aus dem Behälter entnommen wird, insbesondere aus dem köcherartigen Behälter herausgezogen wird, schwenken die Standfüße durch die Federkraft automatisch bis an ihren Anschlag aus, so daß die Aufstellung des Dreiecks wesentlich erleichtert wird. Die mit der Aufstellung befaßte Person kann sich auf die Aufrichtung der zwei roten rückstrahlenden Leisten konzentrieren. Da alle vier Standfüße bis zum Anschlag ausschwenken, ergibt sich immer die durch die Anschläge vorgegebene optimale Aufstellsicherheit. Es kann nicht vorkommen, daß die Standfüße unvollständig ausgeschwenkt werden und das so aufgestellte Warndreieck infolge unzureichender Standfestigkeit durch Windstöße des Fahrzeugverkehrs auf der Fahrbahn verschoben oder umgeworfen wird.

Nach der bevorzugten Ausführungsform der Erfindung ist die Feder als wendelförmige Torsionsfeder ausgebildet. Die wendelförmige Torsionsfeder hat nur einen geringen Raumbedarf , der sich auch beim Ausschwenken der Standfüße nicht vergrößert. Insbesondere verursachen die vier wendelförmigen Federn keine Zunahme der Dicke des Warndreiecks in der zusammengelegten Form. Das zusammengelegte Warndreieck kann daher in einem relativ flachen Behälter untergebracht werden.

Nach der bevorzugten Ausführungsform ist jeder Standfuß nahe seinem einen Ende abgewinkelt und sein abgewinkeltes Teil in einem Lager gelagert. Die so gebildeten Gelenke sind zweckmäßigerweise einfache Reibungsgelenke, die verhältnismäßig kostengünstig herzustellen sind.

Nach der bevorzugten Ausführungsform der Erfindung umgibt die Torsionsfeder den abgewinkelten Teil des Standfußes wenigstens teilweise, ist das eine Ende der vorgespannten Feder mit dem Standfuß drehfest verbunden und das andere Ende der Feder in einem Lagerkörper abgestützt. Der drehfeste Angriff des einen Federendes an dem Standfuß erfolgt zweckmäßigerweise dadurch, daß dieses Federende das abgewinkelte Ende des Standfußes formschlüssig umfaßt. Hierzu hat wenigstens der abgewinkelte Teil des Standfußes einen nicht-kreisförmigen, insbesondere eckigen Querschnitt. Es ist jedoch auch möglich, das Ende der Torsionsfeder in anderer Weise mit dem Standfuß drehfest zu verbinden, z.B. dadurch, daß man dieses Ende der Feder durch eine in dem abgewinkelten Teil des Standfußes ausgebildete Bohrung führt und so befestigt. Wenn

2

EP 0 342 449 B1

das andere Federende unter Drehspannung in einem Lagerkörper, z.B. dem die Feder und das abgewinkelte Ende des Standfußes umgebende Gehäuse abgestützt ist, wird auf den Standfuß ständig ein Drehmoment ausgeübt, was zur Folge hat, daß der Fuß schon bei der Entnahme des zusammengelegten Warndreiecks aus dem Behälter automatisch ausschwenkt.

Vorzugsweise sind die an jedem Ende der Trägerplatte paarweise vorgesehenen Lager in einem Lagerkörper ausgebildet, der an der Trägerplatte fest angebracht ist, insbesondere in eine Ausnehmung der Trägerplatte fest eingesetzt ist. Dieser die beiden Standfußlager und Torsionsfedern und vorzugsweise auch die beiden Anschläge enthaltende Lagerkörper kann aus Kunststoff z.B. durch Spritzgießen kostengünstig hergestellt werden. Die Ausnehmung in der Trägerplatte ist z.B. ein von ihrer Unterkante aufwärts verlaufender Schlitz. Der Lagerkörper hat dann einen Steg, der seine beiden symmetrischen Lager beiderseits der Trägerplatte verbindet. Durch das Einsetzen des Steges in den Schlitz der Trägerplatte wird der Lagerkörper an der Trägerplatte fest montiert. Bei der bevorzugten Ausführungsform ist das abgewinkelte Teil des Standfußes und die diesen Teil umgebende Torsionsfeder in dem Lagerkörper eingekapselt. Der Lagerkörper ist somit als Doppelgehäuse ausgebildet, in dem die abgewinkelten Standfußteile mit ihren Torsionsfedern enthalten sind. Auf diese Weise werden die Torsionsfedern vor Schmutz und Feuchtigkeit weitgehend geschützt.

Nach der bevorzugten Ausführungsform der Erfindung sind die Schwenkachsen der Standfüße an jedem der beiden Enden der Trägerplatte unter einem spitzen Winkel β zur Trägerplattenebene geneigt. Die beiden Achsen stehen im wesentlichen V-förmig symmetrisch zur Trägerplatte. Durch diese Neigungen wird erreicht, daß die in der eingeschwenkten Lage nicht unter die Unterkante der Trägerplatte ragenden Standfüße beim Ausschwenken mit ihren äußeren Enden in eine Position unterhalb der Trägerplattenunterkante kommen. Auf diese Weise erhält das aufgestellte Warndreieck die vom Gesetzgeber vorgeschriebene Bodenfreiheit, was für die Erkennbarkeit aus größerer Entfernung und auch für die Standfestigkeit bei Windeinwirkung von Vorteil ist.

Vorzugsweise bestehen die Standfüße aus Stahldraht. Windstöße können durch die federnden Füße gut abgefangen werden, ohne daß das auf der Fahrbahn stehende Warndreieck verschoben wird oder umkippt. Standfüße aus Stahldraht haben zudem ein geringes Gewicht und einen geringen Raumbedarf nach der Zusammenlegung und Unterbringung des Dreiecks in dem Köcher. Zweckmäßigerweise hat der Stahldraht über seine ganze Länge oder nur in seinem abgewinkelten Teil einen zweiseitig abgeflachten Querschnitt. Die Stärke des Stahldrahtes liegt im allgemeinen in dem Bereich von 3 bis 7 mm, vorzugsweise bei 5 mm.

Zweckmäßigerweise haben die Standfüße in der an die Trägerplatte eingeschwenkten Lage einen sich an den Lagerkörper anschließenden, parallel zur Unterkante der Trägerplatte verlaufenden Teil und einen aufgebogenen Teil. Die Enden der Standfüße sind wieder nach unten abgebogen, damit nach dem Ausschwenken der Füße der erforderliche Bodenabstand des Dreiecks gewährleistet ist. Es ist ferner zweckmäßig, daß auf die freien Enden der Standfüße Kunststoffkappen aufgesetzt sind und jede Kappe auf der Unterseite eine die Fußendkante frei lassende Öffnung aufweist. Die Kunststoffkappen dienen zum Schutz des Benutzers. Sie verhindern, daß der Benutzer beim automatischen Ausschwenken der Standfüße eventuell durch die Fußendkanten verletzt wird. Die freigeschnittene Öffnung läßt aber zu, daß diese Kante beim Aufstellen des Dreiecks mit der rauhen Fahrbahnoberfläche in Eingriff kommt, so daß ein ausreichendes Stehvermögen bei Windeinwirkung gegeben ist.

Bei einer anderen Ausführungsform des erfindungsgemäßen Warndreiecks ist am abgewinkelten Teil des Standfußes eine wenigstens eine Federwindung, vorzugsweise zwei Federwindungen breite Quernut ausgebildet und weisen die Federwindungen im Bereich der Quernut im wesentlichen geradlinige Bereiche auf, die sich bei der Torsionsbeanspruchung der Feder in die Quernut legen und so das abgewinkelte Standfußteil gegen Axialverschiebung in der Bohrung des Lagerkörpers sichern.

Zweckmäßigerweise sind zwei mit Rückstrahlflächen versehene Leisten um an der Trägerplatte befindliche Gelenke schwenkbar, liegen die Gelenke an der Trägerplatte im Höhenbereich ihrer Leistenteile und ist die Leiste an ihrem Anlenkende mit einer über ihre Nachtreflektorfläche hinausgehenden Anformung versehen, in der ihr Gelenk angeordnet ist. Durch die Anordnung der Gelenke der beiden schwenkbaren Leisten auf unterschiedlicher Höhe, d.h. in unterschiedlichem Abstand von der Unterkante der Trägerplatte, lassen sich die Leisten hinter bzw. vor die Trägerplatte schwenken, bis sie fluchtend hintereinander liegen. Da der vorderseitig die Nachtreflektorfläche tragende Leistenteil 1 an sich im oberen Bereich der Trägerplatte endet, ist eine Anformung vorgesehen, die so tief herabreicht, daß der Gelenkpunkt der Leiste in dieser Anformung genügend tief angeordnet werden kann.

Die Erfindung wird nachfolgend an Hand der Zeichnung näher beschrieben. Es zeigen

Figur 1 die Vorderansicht des erfindungsgemäßen aufgestellten Warndreiecks mit ausgeschwenkten Standfüßen;

Figur 2 die Vorderansicht des zusammengelegten Warndreiecks mit eingeschwenkten Standfüßen;

Figur 3 die Draufsicht des in Figur 1 dargestellten aufgestellten Warndreiecks;

Figur 4 einen Schnitt nach der Linie IV-IV der Figur 3 in vergrößertem Maßstab;

Figur 5 eine Ansicht der in Figur 4 gezeigten Standfußlagerung von unten;

Figur 6 einen Schnitt nach der Linie VI-VI der Figur 4;

Figur 7 einen Teilschnitt ähnlich wie Figur 4 einer etwas geänderten Ausführungsform des erfindungsgemäßen Warndreiecks;

Figur 8 einen Schnitt nach der Linie VIII-VIII der Figur 7;

Figur 9 eine Seitenansicht des mit einer Schutzkappe bestückten Standfußes bei Bodenberührung; und

Figur 10 die rechte untere Ecke des aufgestellten Warndreiecks nach Figur 1 von hinten, wobei die Standfüße noch eingeschwenkt sind.

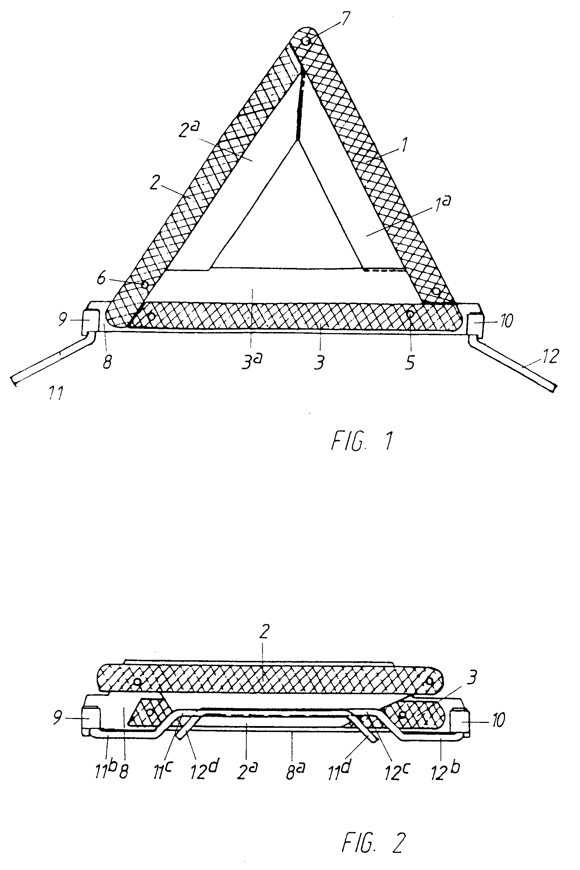

Die in den Figuren 1 und 2 gezeigte Ausführungsform des erfindungsgemäßen Warndreiecks hat drei rote, rückstrahlende Leisten 1-3, an die nach innen die Leisten 1ª, 2ª bzw. 3ª mit roter fluoreszierender Oberfläche angeformt sind. Die Kunststoffleiste 3,3ª ist an der Vorderseite einer aus Stahl bestehenden Trägerplatte 8 befestigt, wobei die rot fluoreszierende Leiste 3ª auch durch eine auf die Trägerplatte 8 unmittelbar aufgebrachte fluoreszierende Folie ersetzt werden kann. Die Leiste 1,1ª ist um das Gelenk 5 schwenkbar, die Leiste 2,2ª um das Gelenk 6. Wenn Die Leisten 1,1ª und 2,2ª in die in Figur 1 dargestellte Lage hochgeschwenkt sind, können sie durch den Druckknopf 7 verbunden werden.

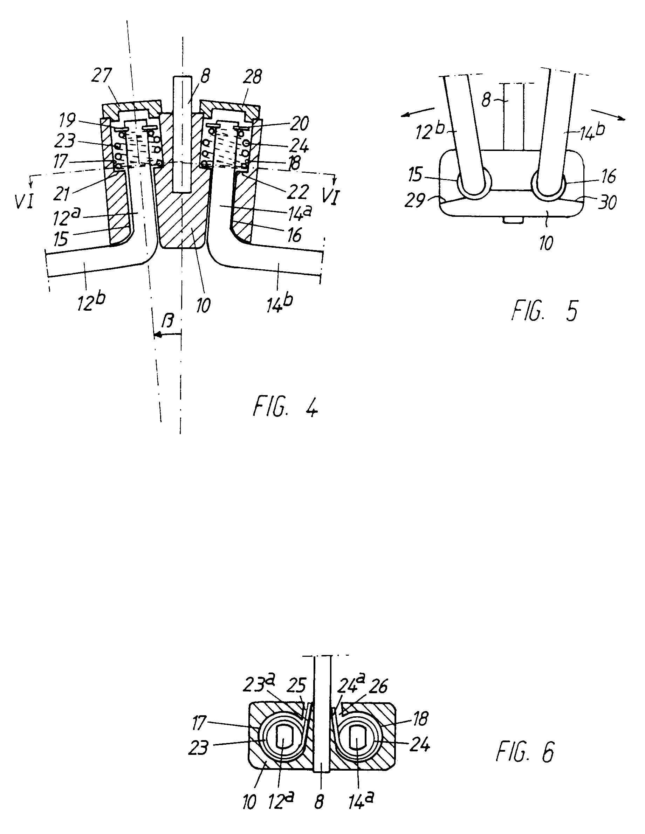

An den beiden Enden der Trägerplatte 8 sind aus Kunststoff bestehende Lagerkörper 9 bzw. 10 angebracht, deren Befestigung an der Platte 8 weiter unten näher beschrieben wird. In jedem der beiden Lagerkörper 9 und 10 sind zwei Standfüße ausschwenkbar gelagert, von denen in den Figuren 1 und 2 nur die beiden vor der Trägerplatte 8 angelenkten Standfüße 11 und 12 in ausgeschwenkter bzw. eingeschwenkter Lage dargestellt sind, die hinter der Trägerplatte 8 angelenkten Standfüße jedoch ebenso ausgebildet sind wie die Standfüße 11 und 12. In Figur 1 sind die Standfüße 11 und 12 vereinfacht, d.h. ohne die aus Figur 2 ersichtlichen Biegungen dargestellt. Nach Figur 2 haben die Standfüße 11 und 12 einen in den Lagerkörpern 9 bzw. 10 aufgenommenen abgewinkelten Teil, der in Figur 4 besser erkennbar ist, einen in der dargestellten, eingeschwenkten Lage parallel zur Unterkante 8ª der Trägerplatte 8 verlaufenden Teil 11ᵇ bzw. 12ᵇ, einen sich daran anschließenden hochgebogenen Teil 11ᶜ bzw. 12ᶜ und einen wieder abwärts gebogenen Endteil 11ᵈ bzw. 12ᵈ. Aus Figur 2 ist ersichtlich, daß die Form der Standfüße im wesentlichen gleich ist, so daß beide Füße 11 und 12 beim Einschwenken an die Trägerplatte 8 mit ihren hochgebognen Teilen 11ᶜ und 12ᶜ übereinander zu liegen kommen. Die Standfüße bestehen aus 5 mm starkem Stahldraht mit abgeflachten Seiten. Die in den Figuren 1 und 2 unsichtbaren, hinter der Trägerplatte 8 angelenkten Standfüße 13 und 14 sind ebenso ausgebildet wie die Standfüße 11 und 12.

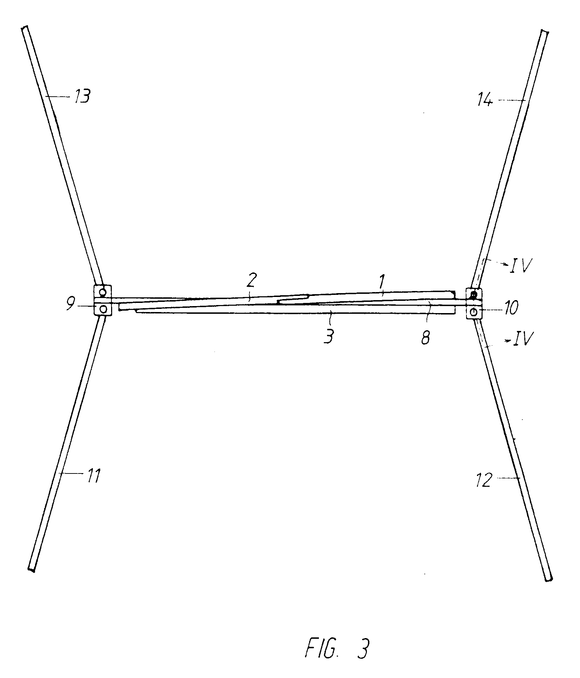

Figur 3 zeigt die Draufsicht des aufgestellten Warndreiecks mit den bis zum Anschlag maximal ausgeschwenkten Standfüßen 11-14. Die ausgeschwenkten Standfüße reichen weit vor und hinter den Dreieckaufbau 1-8 und verleihen diesem daher eine gute, federnde Standfestigkeit.

Aus den Figuren 4 bis 6 ist ersichtlich, daß der Lagerkörper 10 symmetrisch zur Mittelebene, d.h. zur Trägerplatte 8 ausgebildet ist und vor und hinter dieser Platte gleiche Lager für die beiden Standfüße 12 und 14 enthält. Der Lagerkörper 10 ist von unten in einen in der Trägerplatte 8 ausgebildeten Schlitz fest eingesetzt. Er hat zwei Bohrungen 15 und 16, die als Drehlager für die abgewinkelten Endteile 12ª bzw. 14ª der Füße 12,14 dienen. Aus Figur 4 ist weiter erkennbar, daß die Lagerbohrungen 15 und 14 und damit auch die Schwenkachsen der Standfüße 12 und 14 zur Ebene der Trägerplatte 8 schwach geneigt sind, wobei der Neigungswinkel $\beta$ in dem Bereich von 1 bis 20°, vorzugsweise in dem Bereich von 5 bis 15° liegt. Die Lagerbohrungen 15 und 16 gehen nach oben in Kammerbohrungen 17 bzw. 18 über, deren Durchmesser größer als der der Lagerbohrungen 15 bzw. 16 ist. Die abgewinkelten Endteile 12ª bzw. 14ª ragen mit ihren Enden konzentrisch in die Kammerbohrungen 17 bzw. 18 und tragen am oberen Ende einen Federring 19 bzw. 20. Zwischen einer Schulter 21 bzw. 22 zwischen den Bohrungen 15/17 bzw. 16/18 und dem Federring 19 bzw. 20 ist eine Torsionsschraubenfeder 23 bzw. 24 angeordnet.

Wie aus Figur 6 ersichtlich ist, haben die Standfußendteile 12ª bzw. 14ª einen kreisförmigen Querschnitt mit abgeflachten parallelen Seitenflächen. Die oberste Windung der Federn 23 bzw. 24 liegt dem Endteil 12ª bzw. 14ª formschlüssig an, so daß zwischen Feder 23 bzw. 24 und Endteil 12ª bzw. 14ª eine drehfeste Verbindung hergestellt wird. Das untere Ende 23ª bzw. 24ª der schraubenförmigen Feder 23 bzw. 24 ist geradlinig ausgebildet und ragt in eine Ausnehmung 25 bzw. 26 in dem Lagerkörper 10 und stützt an der Wandung dieser Aus nehmung ab. Die Federn 23 und 24 sind unter Torsionsspannung in die Kammerbohrungen 17 bzw. 18 eingesetzt. Sie verleihen daher den Standfüßen 12 bzw. 14 ein permanentes Drehmoment in Richtung der Pfeile in Figur 5. Auf die Kammerbohrungen 17 und 18 sind Schutzkappen 27 bzw. 28 mit Preßsitz aufgesetzt. Die Federn 23,24 werden so vor Feuchtigkeit und Staub geschützt. Aus der in Figur 5 gezeigten Bodenansicht des Lagerkörpers 10 ist ersichtlich, daß dieser zwei Anschläge 29 und 30 hat, durch welche die maximale Ausschwenkung der Standfüße 12 bzw. 14 in Pfeilrichtung begrenzt wird. Der Lagerkörper 9 am anderen Ende der Trägerplatte 8 ist spiegelbildlich in gleicher Weise ausgebildet wie der Lagerkörper 10.

Die Erfindung ist nicht auf die dargestellte Ausführungsform des Warndreiecks beschränkt. So können sich die Torsionsfedern auch außerhalb des Lagerkörpers, z.B. unterhalb oder oberhalb von diesem befinden, wenn die abgewinkelten Endteile 12ᵃ bzw. 14ᵃ sich durch den Lagerkörper hindurch erstrecken. Es ist auch möglich, jeweils beide Standfüße an einem Ende der Trägerplatte 8 durch eine einzige Torsionsfeder zu spannen, wobei das eine Federende den horizontalen Teil 12ᵇ des einen Standfußes 12 und das endere Federende den horizontalen Teil 14ᵇ des anderen Standfußes 12 spannt.

Bei dem erfindungsgemäßen Warndreieck sind die Gelenke 5 und 6 asymmetrisch angeordnet: das Gelenk 5, mit dem die Leisten 1,1ᵃ an der Trägerplatte 8 angelenkt sind, ist wesentlich tiefer, d.h. in geringerem Abstand von der Trägerplattenunterkante 8ᵃ angeordnet als das Gelenk 6, mit dem die Leisten 2,2ᵃ angelenkt sind. Wichtig ist auch, daß die Leisten 1,1ᵃ und 3,3ᵃ im Punkt 5 durch nur eine Niete verbunden sind.

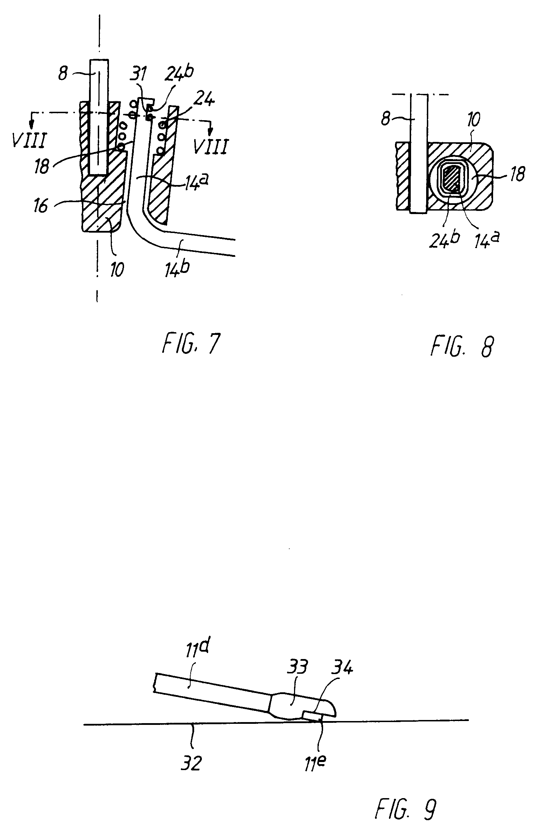

Die Figuren 7 und 8 zeigen eine gegenüber der Figur 4 etwas geänderte Ausführungsform, bei der die Federringe 19 und 20 weggefallen sind. Stattdessen haben die abgewinkelten Endteile der Standfüße, von denen nur das Endteil 14ᵃ dargestellt ist, am oberen Ende eine Quernut 31. Die Torsionsschraubenfeder 24 hat im Bereich der Quernut 31 zwei Windungen 24ᵇ mit etwa geradlinigen Windungsteilen, wie aus Figur 8 erkennbar ist. Da die Torsionsfeder 24 nach dem Einsetzen in die Kammerbohrung 18 unter Torsionsspannung steht, legen sich zwei geradlinige Bereiche der Windungen 24ᵇ in die Quernut 31 und legen dadurch den aufgebogenen Teil 14ᵃ in der Bohrung 16 gegen Axialverschiebung fest. Die so erreichte Wirkung ist mithin die gleiche wie die des in Figur 4 gezeigten Federrings 20.

Die Figur 9 zeigt das abwärts gebogene Endteil 11ᵈ eines Standfußes 11, auf dessen Ende eine Kunststoffkappe 33 aufgesetzt ist. Diese Kunststoffkappe ist mit einer Öffnung 34 versehen, die die Endkante 11ᵉ des Standfußes 11 im unteren, d.h. der Fahrbahnoberfläche 32 zugewandten Teil freiläßt, so daß die Kante 11ᵉ mit der rauhen Fahrbahnoberfläche in Eingriff kommen kann und sich die nötige Standfestigkeit des Warndreiecks ergibt. Andererseits verhindert die Kappe 33, daß ein Benutzer des Warndreiecks durch die Enden der Standfüße 11-14 verletzt wird, wenn diese selbsttätig ausschwenken.

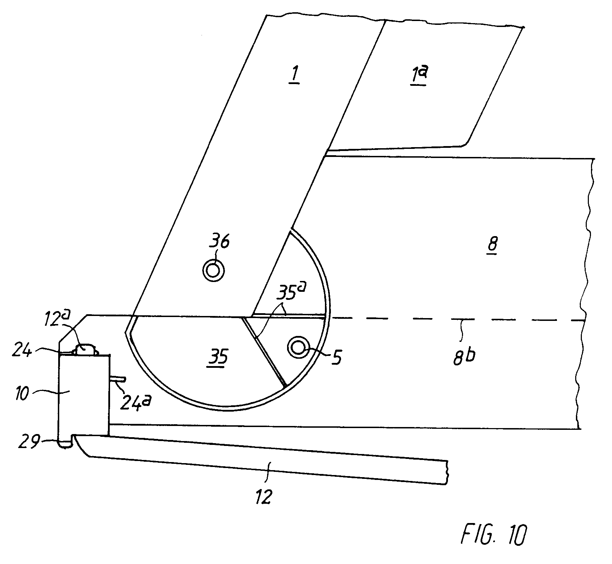

Die Figur 10 zeigt die rechte untere Ecke des gemäß Figur 1 aufgestellten Warndreiecks von hinten, wobei die Standfüße 12 noch eingeschwenkt sind. Die aus Kunststoff bestehende Leiste 1,1ᵃ hat am Anlenkende eine kreisbogenförmige Anformung 35. Der Gelenkpunkt 5 der Leiste 1,1ᵃ befindet sich im Bereich der Anformung 35 unterhalb der Linie 8ᵇ der Trägerplatte 8, die vorderseitig die obere Tagesreflexionsfläche von der unteren Nachtreflektorfläche trennt. Die Anformung 35 hat eine geringere Plattendicke als die Leiste 1, ist aber durch die radialen Rippen 35ᵃ beiderseits des Gelenks 5 verstärkt. Die Niete 36 dient zur Befestigung des Nachtreflektors auf der Vorderseite der Kunststoffleiste 1. Das Gelenk des Standfußes 12 entspricht der Darstellung nach Figur 7 und braucht nicht weiter erörtert zu werden.

## Patentansprüche

1. Zusammenlegbares Warndreieck zur Mitführung in Kraftfahrzeugen, mit drei roten, rückstrahlenden Leisten, von denen eine an einer metallischen Trägerplatte angebracht ist oder selbst als Trägerplatte dient, und Lagern an beiden Enden der Trägerplatte, in denen Standfüße schwenkbar gelagert sind, die unter Federkraft zur Seite bis an einen Anschlag ausschwenkbar sind, dadurch gekennzeichnet, daß an den beiden Enden der Trägerplatte (8) auf beiden Seiten je ein Standfuß (11-14) mit seinem abgewinkelten Endteil (12ᵃ,14ᵃ) in einem Lagerkörper (10) gelagert ist, jeder Standfuß (11-14) durch eine eigene Torsionsfeder (23,24) ständig in Ausschwenkrichtung vorgespannt ist und das abgewinkelte Endteil (12ᵃ,14ᵃ) und die dieses Endteil umgebende Torsionsfeder (23 bzw. 24) in dem Lagerkörper (10) enthalten sind.

2. Warndreieck nach Anspruch 1, dadurch gekennzeichnet, daß die wendelförmige Torsionsfeder (23,24) den abgewinkelten Teil (12ᵃ,14ᵃ) des Standfußes (12,14) wenigstens teilweise umgibt, das eine Ende der vorgespannten Torsionsfeder (23,24) mit dem Standfuß (12,14) drehfest verbunden ist und das andere Ende (23ᵃ, 24ᵃ) der Feder (23,24) an dem Lagerkörper (10) abgestützt ist.

3. Warndreieck nach Anspruch 2, dadurch gekennzeichnet, daß das eine Ende jeder Feder (23,24) das abgewinkelte Ende (12ᵃ,14ᵃ) des Standfußes (12,14) formschlüssig umgibt.

4. Warndreieck nach Anspruch 2, dadurch gekennzeichnet, daß am abgewinkelten Teil (12ᵃ,14ᵃ) des Standfußes (12,14) eine wenigstens eine Federwindung, vorzugsweise zwei Federwindungen breite Quernut (31) ausgebildet ist und die Federwindung(en) (24ᵇ) im Bereich der Quernut (31) im wesentlichen geradlinige Bereiche aufweisen, die sich bei Torsionsbeanspruchung der Feder (12ᵃ,14ᵃ) des Standfußes gegen Axialverschiebung in der Bohrung (15 bzw. 16) des Lagerkörpers (10) sichern.

5. Warndreieck nach einem der Ansprüche 1 bis 4, dadurch gekennzeichnet, daß die an jedem Ende der Trägerplatte (8) paarweise vorgesehenen Lager (15,16) in einem Lagerkörper (10) ausgebildet sind, der an der Trägerplatte (8) fest angebracht ist.

6. Warndreieck nach einem der Ansprüche 1 bis 5, dadurch gekennzeichnet, daß die Schwenkachsen der Standfüße (12,14,11,13) an jedem der beiden Enden der Trägerplatte (8) unter einem spitzen Winkel $\beta$ zur Trägerplatte (8) geneigt sind.

7. Warndreieck nach einem der Ansprüche 1 bis 6, dadurch gekennzeichnet, daß die Standfüße (11-14) aus Stahldraht bestehen.

8. Warndreieck nach Anspruch 7, dadurch gekennzeichnet, daß die Stahldrahtstandfüße (12,14,11,13) über ihre ganze Länge oder nur im abgewinkelten Teil (12ª,14ª) einen zweiseitig abgeflachten Querschnitt haben.

9. Warndreieck nach einem der Ansprüche 1 bis 8, dadurch gekennzeichnet, daß die Standfüße (11-14) in der an die Trägerplatte (8) eingeschwenkten Lage einen sich an den Lagerkörper (10) anschließenden, parallel zur Unterkante (8ª) der Trägerplatte (8) verlaufenden Teil (11ᵇ,12ᵇ) und einen aufgebogenen Teil (11ᶜ,12ᶜ) haben.

10. Warndreieck nach einem der Ansprüche 1 bis 9, dadurch gekennzeichnet, daß auf die freien Enden der Standfüße (11-14) Kunststoffkappen (33) aufgesetzt sind und jede kappe (33) auf der Unterseite eine die Kante (11ᵉ) des Fußendes freilassende Öffnung (34) aufweist.

11. Warndreieck nach einem der Ansprüche 1 bis 10, dadurch gekennzeichnet, daß zwei mit Rückstrahlflächen versehene Leisten (1,1ª und 2,2ª) um an der Trägerplatte (8) befindliche Gelenke (5 bzw. 6) schwenkbar sind, die Gelenke (5 und 6) an der Trägerplatte (8) im Höhenbereich ihrer Leistenteile (3 bzw. 3ª) liegen und die Leiste (1) an ihrem Anlenkende mit einer über ihre Nachtreflektorfläche hinausgehenden Anformung (35) versehen ist, in der ihr Gelenk (5) angeordnet ist.

## Claims

1. Foldable signalisation triangle destined to be taken along in motor cars, comprising three red reflective strips one of which is mounted at a metallic carrier plate or serves as a carrier plate itself, and bearings at both ends of the carrier plate in which supporting legs are pivoted which can laterally be swung out to a stop under action of an elastic force, characterized in that at both ends of the carrier plate (8) on both of its sides a supporting leg (11-14) is pivoted with its angular end portion (12ª,14ª) in a bearing house (10), each supporting leg (11-14) is permanently biased towards the swing-out direction by means of a torsion spring of its own (23,24), and the angular end portion (12ª,14ª) and the torsion spring (23 and 24, respectively) surrounding this end portion are contained in the bearing house.

2. Signalisation triangle according to claim 1, characterized in that the coiled torsion spring (23,24) surrounds at least partially the angular end portion (12ª,14ª) of the supporting leg (12,14), one end of the biased torsion spring (23,24) is fixed at the supporting leg (12,14) and the other end (23ª,24ª) of the spring (23,24) is supported at the bearing house (10).

3. Signalisation triangle according to claim 2, characterized in that one end of each spring (23,24) surrounds the angular end portion (12ª,14ª) of the supporting leg (12,14) in a form-locking manner.

4. Signalisation triangle according to claim 2, characterized in that a transverse notch (31) is formed on the angular end portion (12ª,14ª) of the supporting leg (12,14) which has a width of at least one, preferably two turns of the spring, and the turn(s) of the spring (24ᵇ) comprise substantially straight-lined portions within the range of the transverse notch (31), said straight-lined portion protecting the supporting leg against its axial displacement in the bore (15 or 16) of the bearing house (10) when the spring (12ª,14ª) is torsionally stressed.

5. Signalisation triangle according to any of the claims 1 to 4, characterized in that the bearings (15,16) provided in pairs at each end of the carrier plate (8) are formed in a bearing house (10) which is fixed at the carrier plate (8).

6. Signalisation triangle according to any of the claims 1 to 5, characterized in that the swivel axes of the supporting legs (12,14;11,13) at each of both ends of the carrier plate (8) are set at an acute angle β to the carrier plate (8).

7. Signalisation triangle according to any of the claims 1 to 6, characterized in that the supporting legs (11-14) are made of steel wire.

8. Signalisation triangle according to claim 7, characterized in that the supporting legs (12,14;11,13) made of steel wire have a cross-section which is bilaterally flat along their whole length or only along their angular end portion (12ᵃ,14ᵃ).

9. Signalisation triangle according to any of the claims 1 to 8, characterized in that the supporting legs (11-14) when swung sideways at the carrier plate (8) comprise a portion (11ᵇ,12ᵇ) adjacent to the bearing house (10) and extending in parallel with the bottom edge (8ᵃ) of the carrier plate (8), and a bent-up portion (11ᶜ,12ᶜ).

10. Signalisation triangle according to any of the claims 1 to 9, characterized in that plastics caps (33) are put on the free ends of the supporting legs (11-14), and each cap (33) comprises an opening (34) at its bottom side, said opening leaving blank the edge (11ᵉ) of the end of the leg.

11. Signalisation triangle according to any of the claims 1 to 10, characterized in that two strips (1,1ᵃ and 2,2ᵃ) provided with reflective surfaces are swingable round hinges (5 and 6, respectively) at the carrier plate (8), the hinges (5 and 6) at the carrier plate (8) are situated in the height range of their strip portions (3 and 3ᵃ, respectively), and the strip (1) is provided with a lug (35) extending beyond its night reflective surface at its hinge end with its hinge (5) being arranged in this lug.

## Revendications

1) Triangle de signalisation pliable destiné à être emmené dans des véhicules automobiles, comportant trois bandes rigides ou lattes réfléchissantes, dont l'une est montée sur une plaque de support métallique ou sert elle-même comme plaque de support, et des paliers aux deux extrémités de la plaque de support dans lesquels sont logés des pieds de support ou de maintien debout de manière pivotable, pieds qu'on peut faire pivoter sous l'action d'un ressort vers le côté jusqu'à une butée, caractérisé en ce qu'aux deux extrémités de la plaque de support (8), des pieds de support (11-14) avec leur partie extrême coudée (12ᵃ, 14ᵃ) sont respectivement logés sur les deux côtés dans un corps de palier (10), chacun des pieds de support (11-14) est constamment soumis à une précontrainte en direction de pivotement vers l'extérieur au moyen d'un ressort à torsion propre (23, 24) et la partie extrême coudée (12ᵃ, 14ᵃ) et le ressort à torsion (23 ou 24) entourant cette partie extrême sont contenus dans le corps de palier (10).

2) Triangle de signalisation selon la revendication 1 caractérisé en ce que le ressort à torsion hélicoïdal (23, 24) entoure au moins partiellement la partie coudée (12ᵃ, 14ᵃ) du pied de support, l'une des extrémités du ressort à torsion précontraint (23, 24) est liée en rotation au pied de support (12, 14) et l'autre extrémité (23ᵃ, 24ᵃ) du ressort (23, 24) prend appui sur le corps de palier (10).

3) Triangle de signalisation selon la revendication 2 caractérisé en ce qu'une extrémité de chaque ressort (23, 24) entoure l'extrémité coudée (12ᵃ, 14ᵃ) du pied de support (12, 14) avec liaison par la forme.

4) Triangle de signalisation selon la revendication 2 caractérisé en ce qu'une rainure transversale (31) large d'au moins une spire de ressort, de préférence de deux spires de ressort, est agencée sur la partie coudée (12ᵃ, 14ᵃ) du pied de support (12, 14) et la ou les spires de ressort (24ᵇ) présentent des régions sensiblement rectilignes dans la zone de la rainure transversale (31) qui assurent leur blocage contre un déplacement axial dans l'alésage (15 ou 16) du corps de palier (10) lors de la sollicitation à la torsion du ressort (12ᵃ, 14ᵃ) du pied de support.

5) Triangle de signalisation selon l'une des revendications 1 à 4 caractérisé en ce que les paliers (15, 16) prévus par paires à chacune des extrémités de la plaque de support (8) sont agencés dans un corps de palier (10) qui est monté fixement sur la plaque de support (8).

6) Triangle de signalisation selon l'une des revendications 1 à 5 caractérisé en ce que les axes de pivotement des pieds de support (12, 14, 11, 13) à chacune des deux extrémités de la plaque de support (8) sont inclinés d'un angle aigu β par rapport à cette plaque de support (8).

7) Triangle de signalisation selon l'une des revendications 1 à 6 caractérisé en ce que les pieds de support (11-14) sont constitués de fil d'acier.

8) Triangle de signalisation selon la revendication 7 caractérisé en ce que les pieds de support (12, 14, 11, 13) présentent une section à méplat sur deux côtés sur toute leur longueur ou seulement dans la partie coudée (12$^a$, 14$^a$).

9) Triangle de signalisation selon l'une des revendications 1 à 8 caractérisé en ce les pieds de support (11-14) ont dans la position de pivotement sur la plaque de support (8) une partie (11$^b$, 12$^b$) faisant suite au corps de palier (10) et disposée parallèlement au bord inférieur (8$^a$) de la plaque de support (8) et une partie repliée vers le haut (11$^c$, 12$^c$).

10) Triangle de signalisation selon l'une des revendications 1 à 9 caractérisé en ce que des chapeaux en plastique (33) sont placés sur les extrémités libres des pieds de support (11-14) et chacun des chapeaux (33) comporte une ouverture (34) laissant libre sur la face inférieure l'arête (11$^e$) de l'extrémité du pied.

11) Triangle de signalisation selon l'une des revendications 1 à 10 caractérisé en ce que deux bandes rigides ou lattes (1, 1$^a$ et 2, 2$^a$) sont pivotables au moyen d'articulations (5 ou 6) se trouvant sur la plaque de support (8), les articulations (5 et 6) se trouvent sur la plaque de support (8) dans la zone de leurs parties constituant les bandes rigides ou lattes (3 ou 3$^a$) et la bande rigide ou latte (1) est munie à son extrémité d'articulation d'un appendice (35) dépassant la surface de réflexion nocturne dans lequel est disposée son articulation (5).

FIG. 1

FIG. 2

FIG. 3

FIG. 4

FIG. 5

FIG. 6

FIG. 7

FIG. 8

FIG. 9

FIG. 10